# EUROPEAN PATENT APPLICATION

(11) **EP 1 608 174 A2**
(43) Date of publication of application: **21.12.2005**
(21) Application number: 05012575.6
(22) Date of filing: 10.06.2005
(51) Int. Cl.: H04N 7/16, H04H 1/00, H04N 5/445, H04M 1/725

(54) **Digital broadcast receiving terminal and method for receiving digital broadcasting program guide data**

(30) Priority: 16.06.2004 KR 2004044736
(71) Applicant: SAMSUNG ELECTRONICS CO., LTD., Suwon-si, Gyeonggi-do (KR)
(72) Inventor: Lee, II-Ho, Yeongtong-gu Suwon-si, Gyeonggi-do (KR); Han, Geum-Goo, Yeongtong-gu Suwon-si, Gyeonggi-do (KR); Choi, Sang-II, Yeongtong-gu Suwon-si, Gyeonggi-do (KR)
(74) Representative: Grünecker, Kinkeldey, Stockmair & Schwanhäusser Anwaltssozietät

(57) **Abstract**

A digital broadcast receiving terminal and a process of providing programming guides containing digital broadcasting program information thereof are disclosed. A mobile communication terminal capable of receiving a digital broadcast, a terminal dedicated to receiving a digital broadcast, and methods thereof automatically update EPG data and provide digital broadcasting program information based on the information. The mobile communication terminal capable of receiving the digital broadcast and the terminal dedicated to receiving the digital broadcast can provide diverse services including broadcast reservation and advertisement using channel information included in the EPG data. By maintaining the minimum power when the EPG data is updated or the digital broadcasting program information is guided, the power consumption for confirming the digital broadcasting program information in the mobile communication terminal capable of receiving the digital broadcast and the terminal dedicated to receiving the digital broadcast can be reduced.

## Description

The present invention relates to a digital broadcast receiving terminal and a method of providing programming guides containing digital broadcasting program information thereof, and more particularly to a method of providing programming guides containing digital broadcasting program information performed by a mobile communication terminal capable of receiving a digital broadcast that provides both a mobile communication service and a digital broadcasting service and a terminal for dedicated use in receiving a digital broadcast, and the terminals thereof.

With the development of digital broadcasting technology and mobile communication technology, digital broadcasting services that enable a user to view digital broadcasts even while the user is in motion becomes an increasing matter of concern. Particularly, digital multimedia broadcasting (hereinafter referred to as a "DMB") services received by a mobile communication terminal becomes an increasing matter of concern. The DMB service is a broadcasting service that makes it possible for a user to view diverse multimedia broadcasts by multichannels through a personal portable receiver or a receiver for vehicles having a nondirectional receiving antenna installed therein even while the user is in motion.

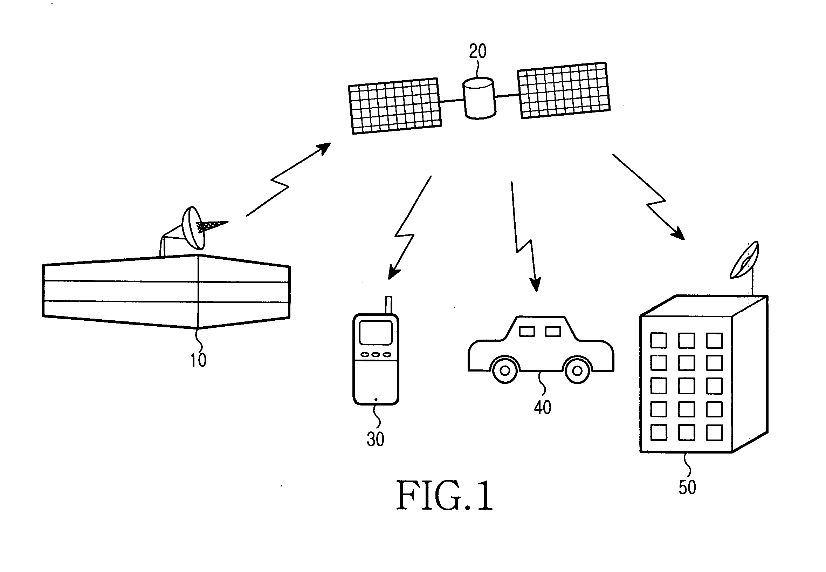

FIG. 1 is an exemplary view illustrating the construction of a system for implementing a DMB service. Referring to FIG. 1, the system for implementing a DMB service includes a data transmission center 10, a satellite 20, and receiving devices (for example, a mobile communication terminal 30, a receiver for vehicles, a home receiver 50, etc.). The data transmission center 10 compresses, modulates and then transmits DMB data (for example, video, audio and data signals) to the satellite 20. The satellite 20 receives, amplifies and frequency-converts the signal transmitted from the data transmission center 10, and then retransmits the converted signal to ground again. The receiving devices 30, 40 and 50 receive, demodulate and decompress the signal retransmitted from the satellite 20 to output the original signals.

One advantage of such a digital broadcasting service is that it exhibits good channel efficiency in comparison to an analog broadcasting service. That is, in analog broadcasting, only one program can be transferred through one physical channel, but in digital broadcasting, several programs can simultaneously be transferred through one physical channel. Accordingly, the digital broadcasting service can provide many programs. However, in order for viewers to easily select their desired programs in the digital broadcasting system, program information should be provided. For this, an EPG (Electronic Program Guide) service has been proposed.

The EPG service enables the viewers to refer to the program information by providing program information about individual broadcasts to the viewers through a broadcasting station that provides programs (or a service operator (SO) of a cable broadcasting). For example, the EPG service provides information (hereinafter referred to as "EPG data") about program titles, start and end times, etc., of the respective programs. Typically, such EPG data is provided at predetermined intervals or when the DPG data is changed.

The receiving devices 30, 40 and 50, which receive and store the EPG data therein, generate digital broadcasting program information using the stored EPG data and provide the program information to the user in response to a user request.

In order for a user to access the digital broadcasting program information as described above, the power of the receiving devices 30, 40 and 50 is turned on, and a digital broadcasting program information menu. Particularly, in the case of the mobile communication terminal 30 for receiving both the digital broadcasts and the mobile communication service, the user is required to perform a series of processes including the turn-on of the main power supply of the mobile communication terminal, operating of a DMB module, and selection of the digital broadcasting program information menu included in the DMB module.

However, it takes a long time and is troublesome to perform the above-described work only for the confirmation of the digital broadcasting program information. Also, in order to access the information, the power of all devices included in the digital broadcast receiving terminal should be turned on, which results in the reduction of the power efficiency of the terminal. Additionally, since the EPG data that includes diverse information is used only for the simple guide of the digital broadcasting programs, the use of the EPG data is limited.

Accordingly, the present invention has been designed to solve at least the above and other problems occurring in the prior art.

It is the object of the present invention to provide a mobile communication terminal capable of receiving a digital broadcast and a terminal for dedicated use in receiving a digital broadcast to conveniently use digital broadcasting program information.

This object is solved by the subject matter of the independent claims.

Preferred embodiments are defined in the dependent claims.

Also, it is an aspect of the present invention to enable a mobile communication terminal capable of receiving a digital broadcast and a terminal for dedicated use in receiving a digital broadcast to provide diverse services including broadcast reservation and advertisement using EPG data.

Also, it -is -an- aspect of the present invention to reduce the power consumption for confirming digital broadcasting program information in a mobile communication terminal capable of receiving a digital signal and a terminal for dedicated use in receiving a digital broadcast.

In one aspect of the present invention, there is provided a mobile communication terminal capable of receiving a digital broadcast, comprising a phone module and a broadcasting module, wherein the phone module controls an on/off operation of the broadcasting module so as to receive digital broadcasting program guide data and update the digital broadcasting program guide data pre-stored in the phone module and the broadcasting module, and outputs digital broadcasting program guide information based on the digital broadcasting program guide data stored in the phone module, and wherein the broadcasting module is turned on by a control of the phone module, updates the digital broadcasting program guide data pre-stored in the broadcasting module, transfers the digital broadcasting program guide data to the phone module, and then is turned off.

In another aspect of the present invention, there is provided a terminal for dedicated use in receiving a digital broadcast, comprising a receiving unit for receiving digital broadcasting data and digital broadcasting program guide data, a digital broadcasting program guide data management unit for storing/managing the received digital broadcasting program guide data, an output unit for outputting the digital broadcasting program guide data, a receiving unit for periodically updating the digital broadcasting program guide data and outputting digital broadcasting program guide information based on the digital broadcasting program guide data, and a control unit for controlling the digital broadcasting program guide data management unit and the output unit.

In still another aspect of the present invention, there is provided a method of providing a programming guide containing digital broadcasting program information of a terminal for receiving a digital broadcast, comprising the steps of automatically updating digital broadcasting program guide data if a predetermined digital broadcasting program information search condition is satisfied, and generating and outputting digital broadcasting program guide information using the digital broadcasting program guide data based on a predetermined output option.

The above object and otheraspects, features and advantages of the present invention will be more apparent from the following detailed description taken in conjunction with the accompanying drawings, in which:
FIG. 1 is an exemplary view illustrating the construction of a system for implementing a DMB service;
FIG. 2 is a block diagram illustrating the construction of a mobile communication terminal capable of receiving a digital broadcast according to a first embodiment of the present invention;
FIG. 3 is a flowchart illustrating a method of guiding digital broadcasting program information according to a second embodiment of the present invention;
FIG. 4 is a flowchart illustrating a method of guiding digital broadcasting program information according to a third embodiment of the present invention;
FIG. 5 is a flowchart illustrating a process of outputting digital broadcasting program guide information according to the second and third embodiments of the present invention;
FIG. 6 is a diagram illustrating an example of EPG data stored in a terminal for receiving a digital broadcast according to an embodiment of the present invention;
FIG. 7 is a block diagram illustrating the construction of a mobile communication terminal for combined use in receiving a digital broadcast according to a fourth embodiment of the present invention; and
FIG. 8 is a flowchart illustrating a method of providing programming guides containing digital broadcasting program information according to a fifth embodiment of the present invention.

Preferred embodiments of the present invention will be described in detail hereinafter with reference to the accompanying drawings. In the following description of the present invention, only parts necessary for understanding the operation of the present invention will be explained, but a detailed description of known functions and configurations incorporated herein will be omitted when it may obscure the subject matter of the present invention.

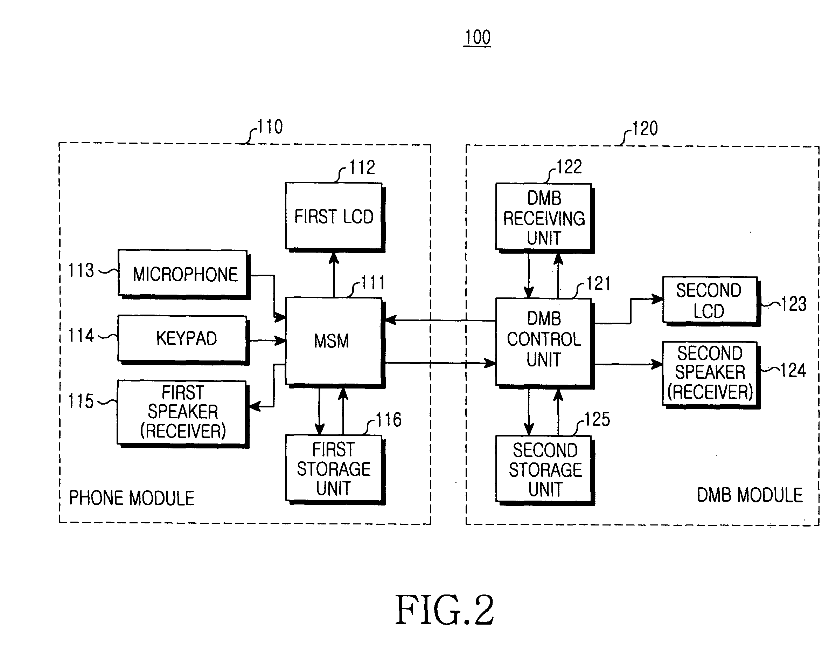

FIG. 2 is a block diagram illustrating the construction of a mobile communication terminal capable of receiving a digital broadcast according to a first embodiment of the present invention. Referring to FIG. 2, the mobile communication terminal 100 according to the first embodiment of the present invention includes a portable phone function module (so called a "phone module") 110 for controlling a portable phone function, and a broadcasting function module (so called a "DMB module") 120 for controlling a broadcast receiving function.

The phone module 110 includes a main control unit 111 (in the embodiment of FIG. 2, -it is implemented by- an MSM (Mobile Station Modem) chip, hereinafter referred to as an "MSM") for controlling the functions of the mobile communication terminal including a portable phone function, a first display unit (LCD) 112 for displaying general functions and related information of the mobile communication terminal including the portable phone function, a microphone 113 for inputting an audio signal, a keypad 114 for inputting a control command to the MSM 111, a first speaker 115 for outputting an audio signal related to the portable phone function, and a first storage unit 116 for storing information related to the functions of the mobile communication terminal including the portable phone function. In this case, the first speaker 115 is a device that operates as a receiver.

The DMB module 120 includes a DMB receiving unit 122 for receiving DMB data, a DMB control unit 121 for decoding the DMB data and outputting information to be provided to a user, a second LCD 123 for displaying video information output from the DMB control unit 121, a second speaker 124 for outputting audio signals output from the DMB control unit 121, and a second storage unit 125 for storing information related to the providing of the DMB services. The second speaker 124 is a device for outputting audio information included in the multimedia information, and provides a stereo function. Additionally, the second LCD 123 is a device for outputting video information included in the multimedia information. The second speaker 124 and the second LCD 123 constitute an output interface unit for outputting the digital broadcast. The output interface unit may be provided with either the speaker or the LCD according to the type of the digital broadcast. For example, in the case of the digital audio broadcast, the output interface unit is composed of the speaker only.

The first speaker 115 and the second speaker 124 or the first LCD 112 and the second LCD 123 may separately be provided, or one speaker and one LCD only may be provided instead.

In the embodiment of the present invention, it is assumed that the phone module 110 and the DMB module 120 are physically separated from each other. However, it is also possible to fabricate all or a part of the phone module 110 and the DMB module 120 into one chip. For example, a part for processing data received through the mobile communication network and a part for processing the digital broadcasting data are fabricated into one chip. Particularly, in the case of the CDMA (Code Division Multiple Access) mobile communication part and the CDM (code Division Multiplexing) type DMB part, it is possible to fabricate them into one chip. However, in this case, -it should be noted that in one chip, the part for receiving and processing the data through the mobile communication network corresponds to the phone module according to the present invention, and the part for receiving and processing the DMB data corresponds to the DMB module according to the present invention.

According to the mobile communication terminal 100 as constructed above according to the present invention, power to the DMB module 120 is periodically supplied under the control of the phone module 110 to receive and transfer the EPG data to the phone module 110, and then the power is turned off.

For example, the MSM 111 turns on the power of the DMB module 120 according to the user's request or predetermined scheduling information (for example, a timer signal and so on). Thus, the DMB control unit 121 of the DMB module 120 controls the DMB receiving unit 122 to receive the EPG data, stores the received EPG data in the second storage unit 125 and simultaneously transfers the EPG data to the MSM 111. The MSM 111 stores the EPG data received from the DMB module 120 in the first storage unit 116. Additionally, the MSM 11 provides the digital broadcasting program information using the EPG data periodically or according to the user's request. For example, the EPG data provides digital broadcasting program time information, broadcast preview information, etc.

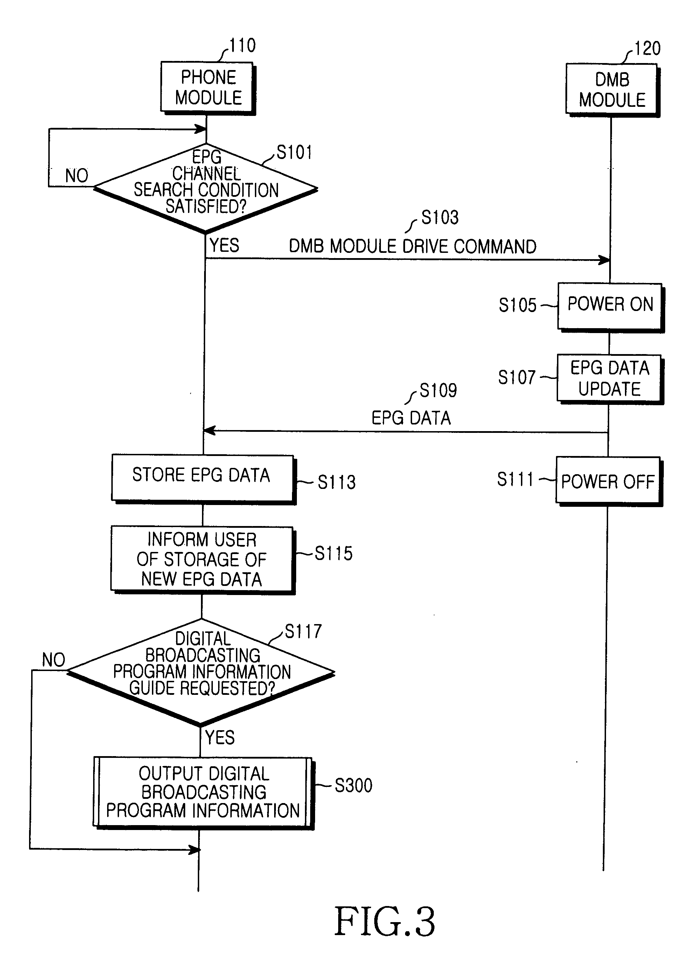

A method of guiding the digital broadcasting program information using the mobile communication terminal 100 (i.e. the mobile communication terminal for combined use in receiving the digital broadcast) is exemplified in FIGs. 3 to 5.

FIG 3 is a flowchart illustrating a method of guiding digital broadcasting program information according to a second embodiment of the present invention. With reference to FIGs. 2 and 3, the method of guiding the digital broadcasting program information according to the second embodiment of the present invention will be explained.

First, the phone module 110 determines if the EPG channel search condition is satisfied in a state that the DMB module 120 is off (step S101). For example, the MSM 111 of the phone module 110 determines if a digital broadcasting program information request signal is input through the keypad 114 or if the time for searching for the EPG channel by the pre-stored scheduler arrives. If the EPG channel search condition is satisfied as a result of determination at step S101, the phone module 110 transfers a command for driving the DMB module 120 to the DMB module 120 (step S103). The phone module 110 outputs a control signal to turn on the power of the DMB module 120. The EPG channel search condition may be a specified time period set by the user, a user's temporary command, or a time period automatically set to match the EPG information transfer period of a broadcasting service provider. Particularly, in the case of confirming the search time of the EPG channel by the pre-stored scheduler at step S101, the phone module 110 automatically transfers a DMB module driving command to the DMB module 120 without input of a separate manipulation signal from the user.

Then, the DMB module 120 turns on the power in response to the control signal (step S105), and updates the EPG data (step S107). That is, the DMB module 120 updates the pre-stored EPG data by receiving the EPG data from the broadcasting station that transmits the digital broadcasting data. Since the method of updating the EPG data through the DMB module 120 does not specifically relate to the present invention, a detailed explanation thereof will be omitted. The DMB module 120 that has updated the EPG data at step S107 transfers the updated EPG data to the phone module 110 (step S109), and then turns off the power (step S111). In this case, turning off of the power to the DMB module 120 may be performed by the DMB module 120 itself, or may be performed under the control of the phone module 110 that has received the EPG data.

The phone module 110 that has received the EPG data stores the EPG data in the first storage unit 116 (step S113), and informs the user that the new EPG data has been stored (step S115). For example, the phone module 110 informs the user of the storing of the new EPG data using methods such as an alarm, bell, vibration, etc. This process (step S115) of informing the user that the new EPG data has been stored may be omitted.

If the user requests the digital broadcasting program information guide (step S117), the phone module 110 outputs the digital broadcasting program information using the EPG data stored in the first storage unit 116 (step S300). For example, the phone module outputs program information being presently broadcast, program information to be broadcast at a specified time, etc. It is preferable that the output form is at least visual or audible. Also, since the process (step S300) is performed irrespective of the on/off state of the DMB module 120, power consumption for the digital broadcasting program information guide can be reduced.

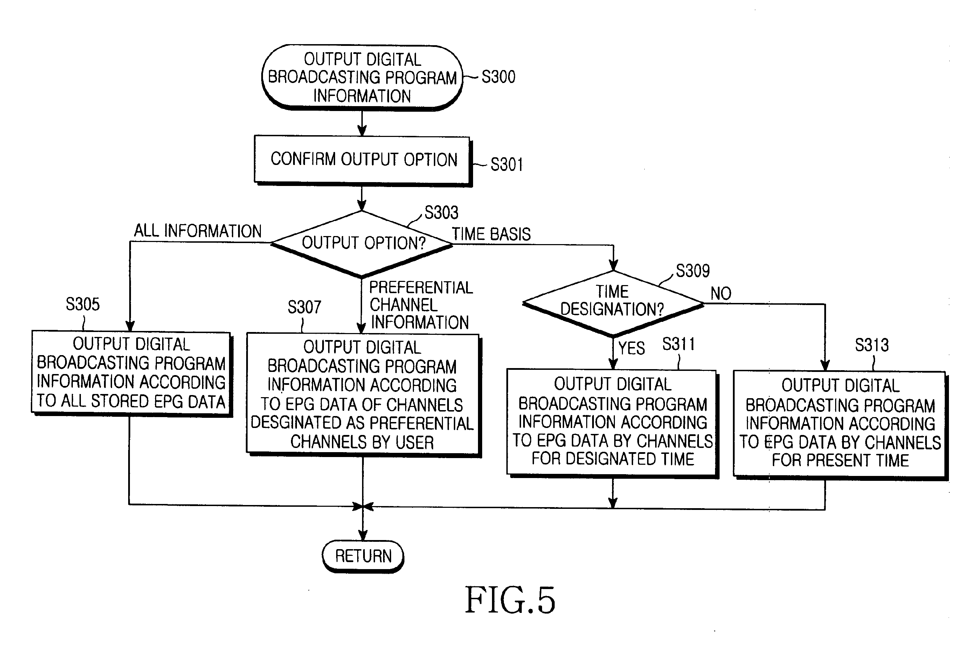

In the process (step S300), a method of outputting the digital broadcasting information is illustrated in FIG. 5. Accordingly, the method of outputting the digital broadcasting program information in the process (step S300) will be explained later with reference to FIG. 5.

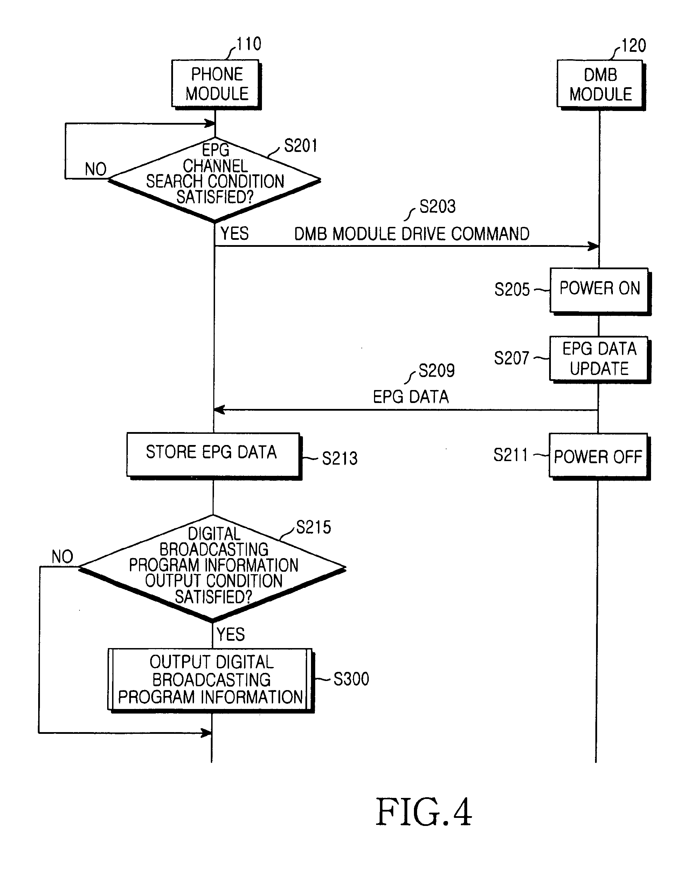

FIG. 4 is a flowchart illustrating a method of providing a programming guide containing digital broadcasting program information according to a third embodiment of the present invention. Referring to FIGs. 2 and 4, a series of processes (steps S201 to S213) in which the phone module 110 drives the DMB module 120, receives and stores the EPG data from the DMB module 120 are similar to the processes (steps S101 to S113) performed in the second embodiment of the present invention and illustrated in FIG. 3. That is, the processes (steps S201 to S213) illustrated in FIG. 4 are similar to the processes (step S101 to S113) illustrated in FIG. 3. Accordingly the detailed explanation thereof will be omitted.

Referring to FIG. 4, the phone module 110 determines the digital broadcasting program information output condition for itself (step S215), and if the digital broadcasting program information output condition is satisfied, the phone module 110 outputs the digital broadcasting program information using the stored EPG data (step S300). For example, the phone module outputs program information being presently broadcast, program information to be broadcast at a specified time, etc. In this case, it is preferable that the output form of the program information is at least visual or audible.

In the process (step S300), a method of outputting the digital broadcasting information is illustrated in FIG. 5. Accordingly, the method of outputting the digital broadcasting program information in the process (step S300) will be explained with reference to FIG 5.

FIG. 5 is a flowchart illustrating a process of outputting digital broadcasting program guide information according to the second and third embodiments of the present invention. Referring to FIG. 5, the process (step S300) of outputting the digital broadcasting program guide information according to the second and third embodiments of the present invention will be explained. First, the phone module 110 determines an output option (step S301), and outputs the digital broadcasting program guide information according to the result of the determination. For example, the phone module determines which one from among "all information / preferential channel information / time designation" the output option of the digital broadcasting program guide information corresponds to (step S303), and perform the corresponding operation.

If the option corresponds to the "all information", the phone module 110 generates the digital broadcasting program information using all of the EPG data stored in the phone module, and then outputs the digital broadcasting program information.

If the option corresponds to the "preferential channel information", the phone module 110 generates the digital broadcasting program information using the EPG data of the channels designated as the preferential channels by the user from among the EPG data stored in the phone module, and then outputs the digital broadcasting program information.

If the option corresponds to the "time designation", the phone module 110 determines if the user has designated a specified time (step S309), and if the user has designated the specified time, the phone module 110 outputs the digital broadcasting program information according to the EPG data by channels for the designated time (step S311). If the user has not designated the specified time, the phone module 110 outputs the digital broadcasting program information based on the EPG data by channels for the present time (step S313).

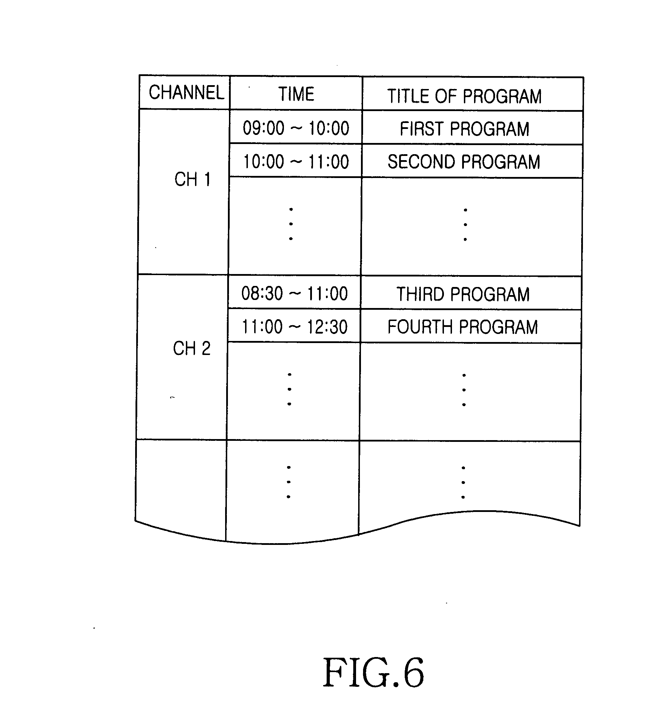

FIG. 6 is a diagram illustrating an example of EPG data stored in a terminal for receiving a digital broadcast according to an embodiment of the present invention. Referring to FIG. 6, the EPG data includes program information by channels and time zones. Accordingly, the process (step S300) extracts and outputs the program information corresponding to the time and the channel required for the digital broadcasting program information based on the EPG data.

If the EPG data includes program advertisement information, the advertisement information can be provided to the user using the information. Based on the program guide and the advertisement time information, the advertisement broadcasting of the corresponding program can be performed.

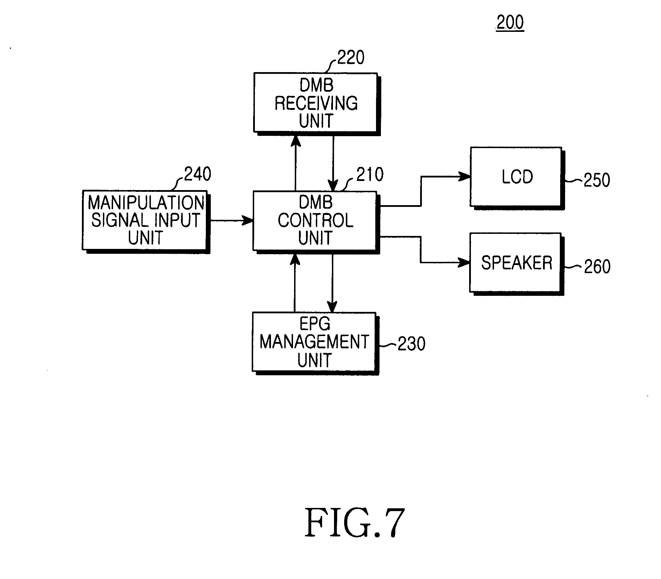

FIG. 7 is a block diagram illustrating the construction of a mobile terminal capable of receiving a digital broadcast according to a fourth embodiment of the present invention. Referring to FIG. 7, the terminal 200 is dedicated to receiving the digital broadcast and includes a DMB control unit 210, a DMB receiving unit 220, an EPG management unit 230, a manipulation signal input unit 240, an LCD 250 and a speaker 260.

The DMB control unit 210 controls the operation of the terminal 200 based on commands input through the manipulation signal input unit 240 and a pre-stored operation program. The DMB control unit 210 controls the operation of the DMB receiving unit 220, the EPG management unit 230, the LCD 250 and the speaker 260 to periodically update the EPG data and provide the digital broadcasting program guide information to the user. The automatic EPG data update operation can be performed to match the EPG information transfer period provided by a broadcasting service provider. In this case, it is preferable to determine that the terminal 200 dedicated to receiving the digital broadcast uses the minimum power. For example, it is preferable that in the case of receiving and updating the EPG data, the DMB control unit 210 controls the power so that only the DMB receiving unit 220 and the EPG management unit 230 operate, and in the case of providing the digital broadcasting program guide information based on the information after the update of the EPG data, it controls the power so that only the LCD 250 and/or the speaker 260 and the EPG management unit 230 operate.

The DMB receiving unit 220 receives and transfers the DMB data and the EPG data to the DMB control unit 210 under the control of the DMB control unit 210, and the EPG management unit 230 stores/manages the received EPG data under the control of the DMB control unit 210. The LCD 250 and the speaker 260 output the received DMB data under the control of the DMB control unit 210. The LCD 250 and the speaker 260 output the digital broadcasting program guide information generated by the EPG data stored in the EPG management unit 230. In this case, the LCD 250 displays the video information from among the DMB data or the digital broadcasting program guide information, and the speaker 260 outputs the audio signal from among the DMB data or the digital broadcasting program guide information.

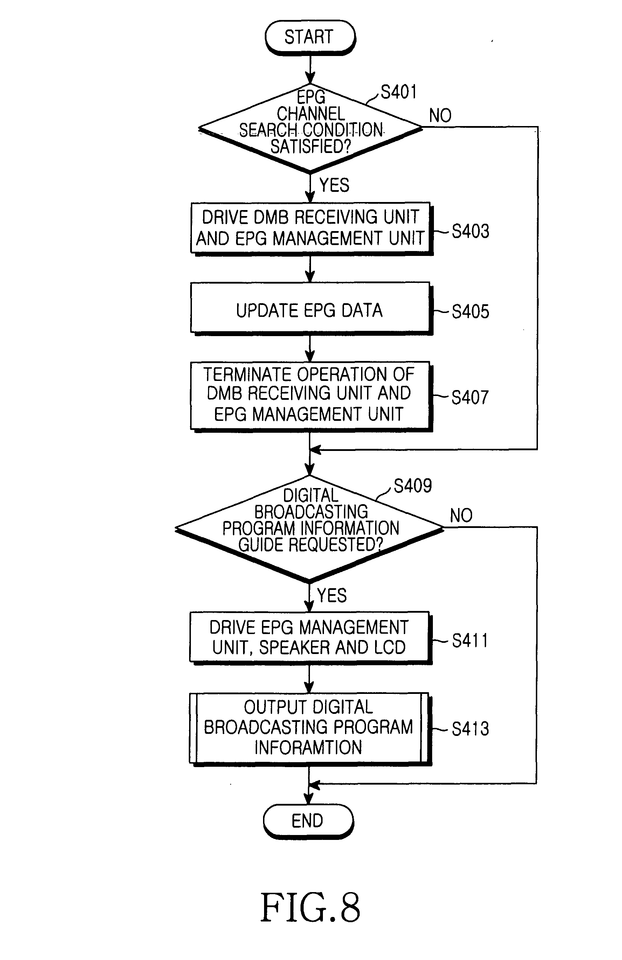

FIG. 8 is a flowchart illustrating a method of providing programming guides containing digital broadcasting program information according to a fifth embodiment of the present invention. Referring to FIGs. 7 and 8, the method of providing programming guides containing digital broadcasting program according to the fifth embodiment of the present invention will be explained.

First, the DMB control unit 210 determines if the EPG channel search condition is satisfied (step S401), and determines whether or not to update the EPG data according to the result of initial determination. For example, the DMB control unit 210 determines if the EPG channel search time arrives by the pre-stored scheduler The EPG channel search condition may be a specified time period set by the user, or a time period automatically set to match the EPG information transfer period of a broadcasting service provider. If the EPG channel search condition is satisfied as a result of the determination (step S401), the DMB control unit 210 drives the DMB receiving unit 220 and the EPG management unit 230 (step S403). That is, the- DMB control- unit 210 generates a command for automatically driving the DMB receiving unit 220 and the EPG management unit 230 without the user manipulation command and drives the DMB receiving unit 220 and the EPG management unit 230. As a result, the DMB control unit 210 receives the EPG data received through the DMB receiving unit 220 and updates the EPG data stored in the EPG management unit 230 (step S405). In the process (step S405), since the method of updating the DMB data does not relate to the present invention a detailed explanation thereof will be omitted.

If the automatic EPG data update is completed, the DMB control unit 210 terminates the operation of the DMB receiving unit 220 and the EPG management unit 230 (step S407). In this case, the DMB control unit 210 generates a command for automatically terminating the operation of the DMB receiving unit 220 and the EPG management unit 230 without the user manipulation command in the same manner as the case that the DMB control unit 210 drives the DMB receiving unit 220 and the EPG management unit 230.

If the digital broadcasting program information guide is requested (step S409), the DMB control unit 210 drives the EPG management unit 230, the LCD 250 and the speaker 260 in order to output the digital broadcasting program information (step S411). Then, the DMB control unit 210 outputs the digital broadcasting program information based on the updated EPG data (step S413). For example, the DMB control unit 210 outputs the presently broadcast program information, the program information to be broadcast at a specified time, etc. In this case, it is preferable that the output form of the program information is at least visual or audible. In the process (step S413), the method of outputting the digital broadcasting program information is similar to that explained with reference to FIG. 5. That is, the digital broadcasting program guide information is output based on the corresponding EPG data according to the output option of the digital broadcasting program guide information.

As described above, it will be apparent that the present invention has the advantages in that by automatically updating the EPG data and providing the digital broadcasting program information based on the updated information, the user of the mobile communication terminal capable of receiving the digital broadcast and the terminal dedicated to receiving the digital broadcast can conveniently use the digital broadcasting program information.

Additionally, according to the present invention, the mobile communication terminal for combined use in receiving the digital broadcast and the terminal for dedicated use in receiving the digital broadcast can provide diverse services including broadcast reservation and advertisement using the channel information included in the EPG information.

Additionally, according to the present invention, by maintaining the minimum power when the EPG data is updated, the power consumption for receiving the digital broadcasting program information in the mobile communication terminal capable of receiving the digital broadcast and the terminal dedicated to receiving the digital broadcast can be reduced.

While the present invention has been shown and described with reference to certain preferred embodiments thereof, it will be understood by those skilled in the art that various changes in form and details may be made therein without departing from the scope of the present invention as defined by the appended claims.

## Claims

1. A mobile communication terminal capable of receiving a digital broadcast, comprising:
a phone module; and
a broadcasting module,
wherein the broadcasting module is periodically activated; receives digital broadcasting program guide data in an active state, and transfers the received digital broadcasting program guide data to the phone module, and
wherein the phone module controls the broadcasting module to be periodically activated, stores the digital broadcasting program guide data transferred from the broadcasting module, and outputs digital broadcasting program guide information using the stored digital broadcasting program guide data.

2. The mobile communication terminal as claimed in claim 1, wherein the phone module comprises:
a storage unit for storing the digital broadcasting program guide data transferred from the broadcasting module;
a control unit for controlling the activation of the broadcasting module, generating and controlling a generation and output of the digital broadcasting program guide information using the digital broadcasting program guide data stored in the storage unit based on a predetermined output option; and
an output unit for outputting the digital broadcasting program guide information under the control of the control unit.

3. The mobile communication terminal as claimed in claim 2, wherein the control unit operates to generate and output digital broadcasting program information by time zones for all channels based on the digital broadcasting program guide data stored in the storage unit if the output option is set to output all the digital broadcasting program information.

4. The mobile communication terminal as claimed in claim 2, wherein the control unit operates to generate and output digital broadcasting program information by time zones for preferential channels based on the digital broadcasting program guide data stored in the storage unit if the output option is set to output the digital broadcasting program information for the preferential channels designated by a user.

5. The mobile communication terminal as claimed in claim 2, wherein the control unit operates to generate and output digital broadcasting program information by channels for a specified time based on the digital broadcasting program guide data stored in--the storage unit if the output option is set to output the digital broadcasting program information for the specified time.

6. The mobile communication terminal as claimed in claim 2, wherein the control unit operates to generate and output digital broadcasting program information by channels for a present time based on the digital broadcasting program guide data stored in the storage unit if the output option is set to output the digital broadcasting program information for the present time.

7. The mobile communication terminal as claimed in one of claims 1 to 6, wherein the broadcasting module is inactivated based on a control signal generated from the broadcasting module after the broadcasting module transfers the digital broadcasting program guide data to the phone module.

8. The mobile communication terminal as claimed in one of claims 1 to 6, wherein the broadcasting module is inactivated based on a control signal transferred from the phone module that has received the digital broadcasting program guide data.

9. A terminal dedicated to receiving a digital broadcast that receives and outputs digital broadcasting data, the terminal comprising:
a receiving unit for periodically receiving digital broadcasting program guide data;
a digital broadcasting program guide data management unit for storing the received digital broadcasting program guide data;
an output unit for outputting digital broadcasting program guide information using the digital broadcasting program guide data stored in the digital broadcasting program guide data management unit; and
a control unit for controlling the receiving unit to be periodically activated.

10. The terminal as claimed in claim 9, wherein the control unit disconnects a power supply to the output unit when the digital broadcasting program guide data is received.

11. The terminal as claimed in claim 9, wherein the control unit disconnects a power supply -to the receiving unit when the digital broadcasting program guide information is output.

12. The terminal as claimed in claim 9, wherein the control unit operates to output the digital broadcasting program guide information based on an output option.

13. The terminal as claimed in claim 12, wherein the control unit operates to generate and output digital broadcasting program information by time zones for all of the channels based on the digital broadcasting program guide data stored in the digital broadcasting program guide data management unit if the output option is set to output all of the digital broadcasting program information.

14. The terminal as claimed in claim 12, wherein the control unit operates to generate and output digital broadcasting program information by time zones for preferential channels based on the digital broadcasting program guide data stored in the digital broadcasting program guide data management unit if the output option is set to output the digital broadcasting program information for the preferential channels designated by a user.

15. The terminal as claimed in claim 12, wherein the control unit operates to generate and output digital broadcasting program information by channels for a specified time based on the digital broadcasting program guide data stored in the digital broadcasting program guide data management unit if the output option is set to output the digital broadcasting program information for the specified time.

16. The terminal as claimed in claim 12, wherein the control unit operates to generate and output digital broadcasting program information by channels for a present time based on the digital broadcasting program guide data stored in the digital broadcasting program guide data management unit if the output option is set to output the digital broadcasting program information for the present time.

17. A method of guiding providing programming guides containing broadcasting program information of a digital broadcast receiving terminal that includes a phone module and a broadcasting module, the method comprising the steps of:
generating by the phone module a control signal for activating the broadcasting module if a predetermined digital broadcasting program information search condition is satisfied;
receiving by the activated broadcasting module digital broadcasting program guide data, transmitting the received digital broadcasting program guide data to the phone module, and then being inactivated; and
storing the digital broadcasting program guide data in the phone module, generating and outputting digital broadcasting program guide information using the stored digital broadcasting program guide data.

18. The method as claimed in claim 17, further comprising the step of reporting by the terminal that the digital broadcasting program guide data is received.

19. The method as claimed in claim 17 or 18, wherein the digital broadcasting program guide data is received according to one of a user request and periodically.

20. The method as claimed in one of claims 17 to 19, wherein the step of generating and outputting the digital broadcasting program guide information is performed according to an output option.

21. The method as claimed in claim 19, wherein the digital broadcasting program guide data is received according to one of a user request and periodically.

22. The method as claimed in claim 20, wherein the output option is predetermined so that the digital broadcasting program information for preferential channels designated by the user or for a specified time is output.

23. The method as claimed in claim 20, wherein the step of outputting the digital broadcasting program guide information is performed according to one of a user request and periodically.

24. The method as claimed in one of claims 17 to 23, wherein the step of outputting the digital broadcasting program guide information is performed when the broadcasting module is in an inactivated state.

25. A mobile terminal capable of receiving a digital broadcast, comprising:
a broadcasting module for being periodically activated to receive digital broadcasting program guide data;
a storage unit for storing the digital broadcasting program guide data transmitted from the broadcasting module; and
a control unit for generating a control signal for periodically activating the broadcasting module, and generating digital broadcasting program guide information from the stored digital broadcasting program guide data if an output of the digital broadcasting program guide information is required.

26. The mobile terminal as claimed in claim 25, wherein the broadcasting module is inactivated after it transmits the digital broadcasting program guide data.

27. The mobile terminal as claimed in claim 25 or 26, wherein the control unit generates the digital broadcasting program guide information when the broadcasting module is in an inactivated state.

28. The mobile terminal as claimed in one of claims 25 to 27, wherein the control unit generates the digital broadcasting program guide information according to a predetermined output option.

29. The mobile terminal as claimed in claim 27, wherein the output option refers to preferential channels designated by a user or a specified time.
